# EUROPÄISCHE PATENTSCHRIFT

(11) **EP 1 261 809 B1**
(45) Veröffentlichungstag und Bekanntmachung des Hinweises auf die Patenterteilung: **07.01.2004**
(21) Anmeldenummer: 01923576.1
(22) Anmeldetag: 15.02.2001
(51) Int. Cl.: F15B 21/04, B01D 35/18

(54) **KÜHLVORRICHTUNG**
COOLING DEVICE
DISPOSITIF DE REFRIGERATION

(30) Priorität: 01.03.2000 DE 10009864
(43) Veröffentlichungstag der Anmeldung: 04.12.2002
(73) Patentinhaber: Hydac Fluidtechnik GmbH, 66273 Sulzbach/Saar (DE)
(72) Erfinder: POHL, Patrick, 66773 Schwalbach (DE); ZEOLLA, Giuseppe, CH-6600 Muralto (CH)
(74) Vertreter: Bartels, Martin Erich Arthur
(86) Internationale Anmeldenummer: PCT/EP2001/001684
(87) Internationale Veröffentlichungsnummer: WO 2001/065123

(56) Entgegenhaltungen:
- CH-A- 533 246
- DE-A- 19 635 777
- US-A- 4 295 964
- US-A- 5 159 821
- US-A- 5 351 664
- PATENT ABSTRACTS OF JAPAN vol. 012, no. 272 (M-724), 28. Juli 1988 (1988-07-28) & JP 63 054590 A (SHOWA ALUM CORP), 8. März 1988 (1988-03-08)

## Beschreibung

Die Erfindung betrifft eine Kühlvorrichtung mit einer von einem zu kühlenden Fluid, insbesondere Hydrauliköl, durchströmbaren Kühleinheit und mit einer Filtereinheit für die Filtration des Fluids.

Dahingehende Kühlvorrichtungen (US-A-4 295 964, CH 533 246 A) sind für eine Vielzahl von Anwendungsfällen einsetzbar und in den verschiedensten Ausführungsformen erhältlich. Die bisher auf dem Markt frei erhältlichen Kühlvorrichtungssysteme bestehen jedoch alle überwiegend aus einer an der Kühleinheit angeflanschten Filtereinheit oder an Kühleinheiten angeschlossene Tankeinheiten, wobei die jeweilige Tankeinheit dann das Filterelement aufnimmt. Die bekannten Kühlvorrichtungen sind also in der Regel aus mehreren Bauteilen zusammengesetzt, wobei die eigenständige Kühleinheit über eine entsprechende Verrohrung mit der eigenständigen Filtereinheit unter Herstellung der Kühlvorrichtung miteinander zu verbinden sind. Hierbei ist nicht auszuschließen, daß es bei der angesprochenen Verrohrung zu Fehlanschlüssen und mithin zu Fehlerquellen bei der Montage der bekannten Kühlvorrichtungen kommt. Ferner bauen die bekannten Kühlvorrichtungen aufgrund ihrer Teilevielfalt konstruktiv groß auf und sind entsprechend schwer, was insbesondere für eine mobile Verwendung nachteilig ist.

Durch die DE 196 35 777 A ist eine Kühlvorrichtung bekannt mit einer von einem zu kühlenden Fluid durchströmbaren Kühleinheit und mit einer Filtereinheit für die Filtration des Fluids, wobei die Kühleinheit und die Filtereinheit einstückig miteinander verbunden sind und wobei die Filtereinheit zusammen mit der Kühleinheit in einem Vorrichtungsgehäuse angeordnet ist. Durch das dahingehende Dokument ist es auch bekannt, als Kühleinheit einen plattenförmigen Lamellenkühler einzusetzen und das Filterelement ist in einem Filtergehäuse bei der bekannten Lösung derart aufgenommen, daß dieses integraler Bestandteil des Vorrichtungsgehäuses ist. Demgemäß sind durch die DE 196 35 777 A die Merkmale a), b), c) sowie f) des Patentanspruches 1 vorbekannt.

Dadurch, daß bei der bekannten Lösung jedoch in Fluidströmungsrichtung der Kühleinheit nachfolgend die Filtereinheit mit dem Filterelement vorgesehen ist, ist nicht auszuschließen, daß die Kühleinheit, ausgebildet als plattenförmiger Lamellenkühler, sich mit der Zeit mit Verschmutzungen zusetzt, was den Betrieb der gesamten Kühlvorrichtung bis zu einem möglichen Ausfall derselben beeinträchtigt. Des weiteren ragt bei der bekannten Lösung das Filtergehäuse mit Filterelement an der Seite der Kühleinheit über diese hinaus, so daß die bekannte Lösung entsprechend viel Einbauraum benötigt.

Durch die US-A-5 159 821 ist eine Kühlvorrichtung bekannt mit den Merkmalen a), b), c) und d) des Patentanspruches 1. Bei der bekannten Kühlvorrichtung nach der US - Entgegenhaltung ist eine in axialer Richtung klein aufbauende Filterscheibe als Filterelement in einem Vorrichtungsgehäuse angeordnet, das auch einen plattenförmigen Lamellenkühler als Kühleinheit aufnimmt. In Fiuidrichtung vor dem Filterelement erstreckt sich innerhalb des Vorrichtungsgehäuses ein Trocknungsmedium, wobei die Filterelementscheibe, die dem Lamellenkühler an dessen einer Längsseite vorgeschaltet ist, dort nur eine geringe Einbaulänge einnimmt. Neben einem geringen Filterwirkungsgrad der dahingehend bekannten Filterscheibe ist diese, als Filterelement im Vorrichtungsgehäuse zusammen mit dem Lamellenkühler aufgenommen, auch nur sehr schwer gegen ein neues Element austauschbar, so daß Montagearbeiten erschwert sind.

Ausgehend von diesem Stand der Technik liegt der Erfindung die Aufgabe zugrunde, die bekannten Kühlvorrichtungen dahingehend weiter zu verbessern, daß diese kompakt und leicht in der Bauweise sind, daß mögliche Fehlerquellen bei der Montage weitestgehend vermieden sind und daß eine Verschmutzung der Kühleinheit ausgeschlossen ist. Eine dahingehende Aufgabe löst eine Kühlvorrichtung mit den Merkmalen des Patentanspruches 1 in seiner Gesamtheit.

Dadurch, daß die Kühleinheit und die Filtereinheit einstückig miteinander verbunden sind (Merkmal a)) und daß die Filtereinheit zusammen mit der Kühleinheit in einem Vorrichtungsgehäuse angeordnet ist (Merkmal b)), ist der bekannte, mehrteilige Aufbau vermieden und die erfindungsgemäße Kühlvorrichtung kann bei gleicher Leistung erheblich kompakter und leichter aufbauen. Durch Integration von Kühleinheit und Filtereinheit in einem Vorrichtungsgehäuse kann darüber hinaus die übliche Verrohrung entfallen und Fehlerquellen sind derart ausgeschlossen.

Des weiteren ist die Filtereinheit in Strömungsrichtung des Fluids vor der Kühleinheit als plattenförmiger Lamellenkühler angeordnet (Merkmale c),d)), was den Vorteil hat, daß nur abgereinigtes Fluid durch den Plattenkühler geführt wird und dergestalt an diesem keine Verschmutzungen auftreten. Insbesondere bei flach gehaltenen Einbauräumen ist die dahingehende Plattenausgestaltung weiter vorteilhaft und durch die wahlweise Anordnung der Filtereinheit im rechten oder linken Wasserkasten der Kühleinheit ist es möglich, die Reihenfolge von Kühleinheit und Filtereinheit miteinander zu vertauschen, was eine weitgehende Anpassung der Kühlvorrichtung an die Einbauverhältnisse vor Ort erlaubt, wobei die Durchströmrichtung des Fluids von Filter- zur Kühleinheit beizubehalten ist.

Dadurch, daß die Filtereinheit sich im wesentlichen entlang der Längsseite des Lamellenkühlers erstreckt, die von den Lamellen des Kühlers selbst freigehalten ist (Merkmal e)), und daß das Filterelement in einem Filtergehäuse aufgenommen ist, das integraler Bestandteil des Vorrichtungsgehäuses ist (Merkmal f)), läßt sich das Filtergehäuse platzsparend an die Außenkontur des Filterelementes anpassen, so daß für dieses auch im Außenumfangsbereich eine sichere Abstützung und Führung innerhalb des Vorrichtungsgehäuses gewährleistet ist. Insgesamt baut die dahingehend erfindungsgemäße Kühlvorrichtung klein auf und benötigt wenig Einbauraum.

Vorzugsweise ist dabei das Vorrichtungsgehäuse aus Blechteilen zusammengesetzt. Besonders bevorzugt ist jedoch die Ausgestaltung als Gußteil, insbesondere als Aluminium-Druckgußteil.

Bei einer weiteren bevorzugten Ausführungsform der erfindungsgemäßen Kühlvorrichtung ist die Filtereinheit zylindrisch ausgebildet und der Fluidzulauf in das Vorrichtungsgehäuse erfolgt im oberen Bereich der Filtereinheit und der Fluidablauf aus der Kühleinheit in ihrem unteren Bereich. Durch die dahingehende Anordnung von Fluidzulauf- und -ablauf läßt sich innerhalb der Kühlvorrichtung ein günstiges Durchströmungsverhalten für das Fluid erreichen.

Vorzugsweise sind dabei im Filtergehäuse mindestens zwei Bypass-Ventile angeordnet, die bei unterschiedlichen Volumenströmen ansprechen. So läßt sich beispielsweise eine verbesserte Anpassung an variable Volumenströme von 60 l bis 160 l erreichen mit der Folge, daß eine Kühlvorrichtung in einem weiten Anwendungsbereich mit unterschiedlichen Größenordnungen an Fluid-Volumenströmen einsetzbar ist, ohne daß konstruktive Änderungen hier notwendig sind.

Als besonders umweltfreundlich hat es sich erwiesen, das Filterelement aus Materialien aufzubauen, die vollständig veraschbar sind, so daß eine rückstandsfreie Entsorgung weitestgehend erreicht ist.

Zur Verbesserung der Kühlleistung ist an die Kühleinheit, insbesondere an eine Stirnseite derselben, eine Motor-Lüftereinheit angeschlossen, die den möglichen Luftdurchsatz im Lamellenkühler erhöht und somit zu verbesserten Kühlergebnissen führt.

Bei einer weiteren bevorzugten Ausführungsform der erfindungsgemäßen Kühlvorrichtung ist das Filtergehäuse von einem Abschlußdeckel verschließbar, wobei am Filtergehäuse eine Anschlußstelle für eine Verschmutzungsanzeige vorgesehen ist. Für die zuletzt genannte Verschmutzungsanzeige läßt sich eine Aussage über den Verschmutzungsgrad des Filterelementes treffen, das im zugesetzten Zustand und mithin verschmutzt gegen ein neues auszutauschen ist. Der dahingehende Austausch erfolgt montagefreundlich und rasch über den genannten oberen Abschlußdeckel am Filtergehäuse. Für eine ortsfeste Montage der Kühlvorrichtung, auch im Mobilbereich, weist diese Festlegeteile auf, die eine lösbare Verbindung mit ortsfesten Komponenten an Maschinen und Vorrichtungen sowie Fahrzeugen erlauben.

Im folgenden wird die erfindungsgemäße Kühlvorrichtung anhand der Zeichnung näher erläutert.
Es zeigen in prinzipieller und nicht maßstäblicher Darstellung die
- Fig.1 bis 3: die Kühlvorrichtung ohne Motor-Lüftereinheit von der Stirnansicht, der Draufsicht und der Seitenansicht;
- Fig.4: teilweise im Schnitt, teilweise in Ansicht dargestellt in Stirnansicht eine erste Ausführungsform der Kühlvorrichtung;
- Fig.5: eine Schaltdarstellung für die Lösung nach der Fig.4;
- Fig.6: eine zweite Ausführungsform der erfindungsgemäßen Kühlvorrichtung, sofern sie sich von der vorausgegangenen ersten Ausführungsform unterscheidet.

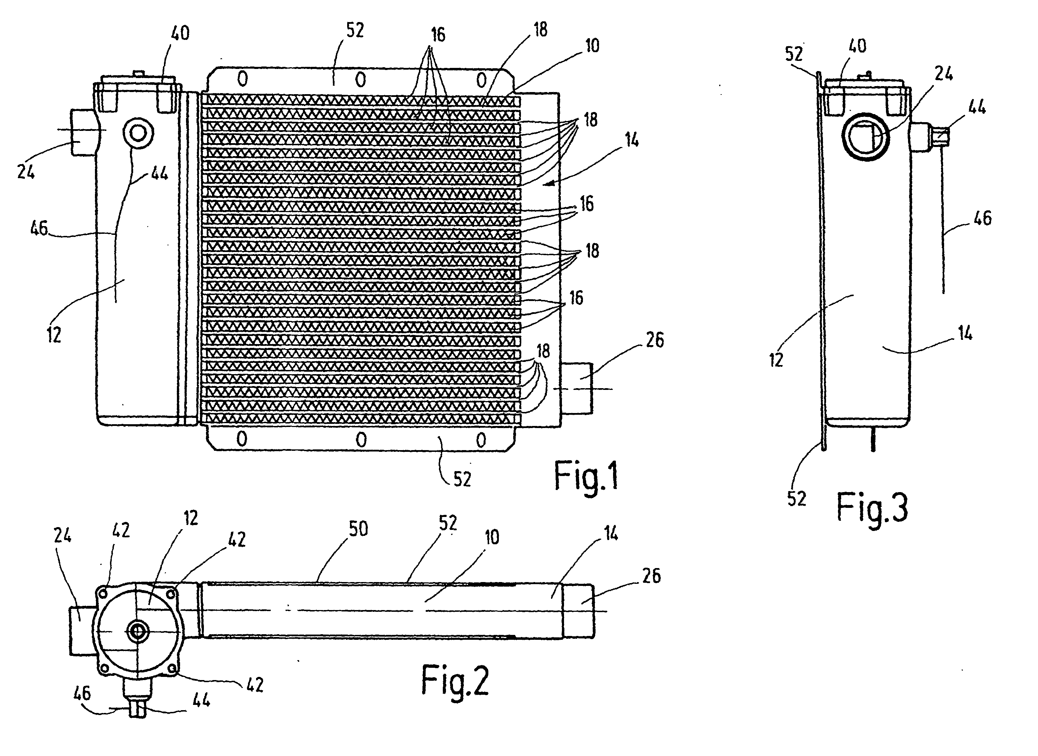

Die Kühlvorrichtung weist eine von einem zu kühlenden Fluid, insbesondere Hydrauliköl, durchströmbare Kühleinheit 10 auf sowie eine Filtereinheit 12 für die Filtration des dahingehenden Fluids. Wie insbesondere die Fig. 1 und 2 sowie die Fig.4 zeigen, sind die Kühleinheit 10 und die Filtereinheit 12 einstückig miteinander verbunden, wobei die Filtereinheit 12 zusammen mit der Kühleinheit 10 in einem Vorrichtungsgehäuse 14 angeordnet sind. Gemäß den nach der Zeichnung dargestellten beiden Ausführungsformen ist die Filtereinheit 12 in Strömungsrichtung des Fluids vor der Kühleinheit 10 angeordnet.

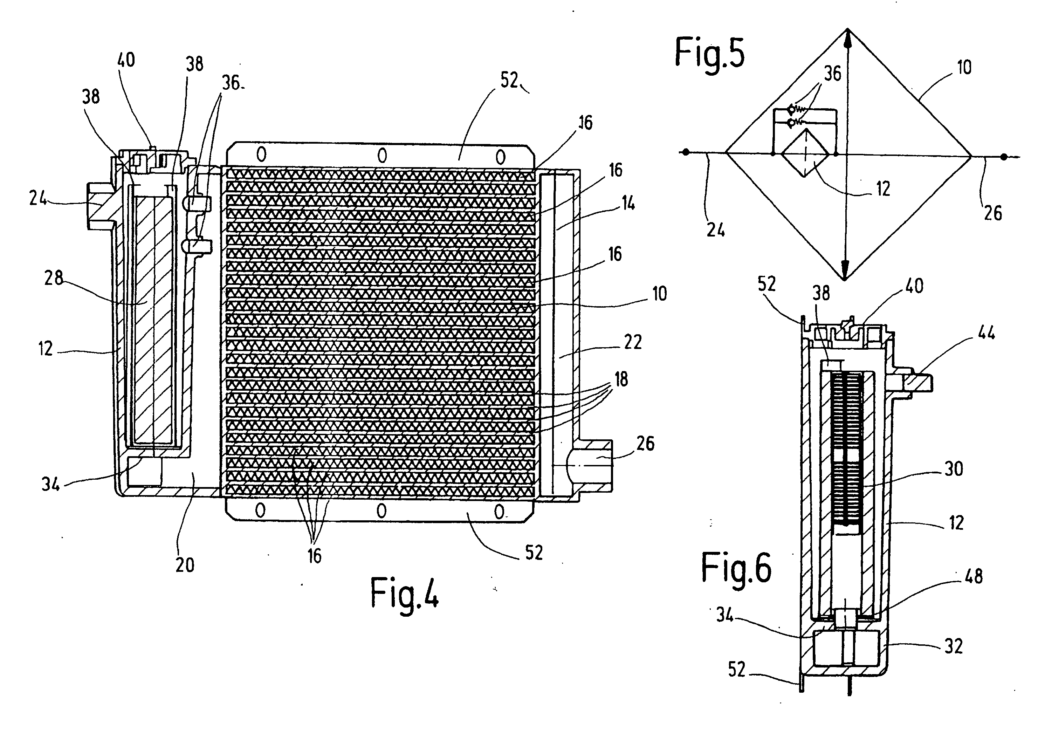

Ferner ist gemäß der Darstellung nach den Fig.1 und 4 die Kühleinheit 10 als plattenförmiger Lamellenkühler ausgeführt. Zur Kühlluftführung weist der Plattenkühler zick-zack-förmig aufgefaltete Lamellen 16 auf, die zwischen sich Fluid-Leitkanäle 18 begrenzen, die dem Transport des zu kühlenden Fluids dienen. Die Luftführungsrichtung durch die Kühleinheit 10 verläuft senkrecht zu der Bildebene der Fig.1 bzw. 4 und die Fluid-Transportrichtung quer dazu, also in der Bildebene. Ferner münden die übereinander angeordneten Fluid-Leitkanäle 18 beidseitig in Fluid-Sammelräume 20,22. Der Aufbau dahingehender Lamellenkühler ist allgemein üblich, so daß an dieser Stelle hierauf nicht mehr näher eingegangen wird. Das Vorrichtungsgehäuse 18 selbst ist in der vorliegenden Ausführungsform als Aluminiumgußteil hergestellt; es ließe sich jedoch auch aus Blechteilen kastenförmig zusammensetzen und zu einem Gehäuse über Schweißnahtverbindungen zusammenfügen.

Die Filtereinheit 12 ist zylindrisch ausgebildet und der Fluidzulauf 24 in das Vorrichtungsgehäuse 14 erfolgt im oberen Randbereich der Filtereinheit 12, wobei der Fluidablauf 26 aus der Kühleinheit 10 in ihrem unteren Bereich über den Fluid-Sammelraum 22 erfolgt. In Blickrichtung auf die Fig. 1 und 4 gesehen erfolgt also die grobe Durchströmungsrichtung von links oben nach rechts unten. Das eigentliche Filterelement 28, das aus üblichen Filtrationsmaterialien besteht und beispielsweise als plissierte, hohlzylindrische Filtermatte ein mittiges Stützrohr 30 umgibt, ist in einem Filtergehäuse 32 aufgenommen, das integraler Bestandteil des Vorrichtungsgehäuses 14 insbesondere in Form eines Gußteiles ist. Das austauschbare Filterelement 28 dient dabei der Abfiltration von Verschmutzungen aus dem Fluid, das über den Fluidzulauf 24 zuführbar ist. Durch die Abfiltrierung von Verschmutzungen aus dem Fluid über das Filterelement 28 ist gewährleistet, daß das abgereinigte Fluid die Kühleinheit 10 durchläuft und dann nicht dort derart Ablagerungen bilden kann, die den Betrieb der gesamten Kühlvorrichtung gefährden könnten.

Bei der Ausführungsform nach der Fig.4 begrenzt das Filtergehäuse 32 zur Kühleinheit 10 hin den Fluid-Sammelraum 20 und ist im Querschnitt im wesentlichen L-förmig ausgebildet, ebenso wie der angrenzende Bereich des Fluid-Sammelraumes 20. Letzterer erstreckt sich, ebenso wie der Fluid-Sammelraum 22, über die gesamte Höhe der gesamten Vorrichtung bzw. der Kühleinheit 10. Das eigentliche Filterelement 28 steht auf dem Boden 34 des integrierten Filtergehäuses 32 auf, wobei der Boden über eine mittige Durchflußausnehmung (nicht gezeigt) verfügt, so daß eine fluidführende Verbindung zwischen dem Inneren des Filterelementes 28 und dem Fluid-Sammelraum 20 gegeben ist. Des weiteren wird das Filterelement 28 von dem verschmutzten Fluid von außen nach innen durchströmt und das derart abgereinigte Fluid wird über die Durchlaßöffnung im Boden 34 und den Fluid-Sammelraum 20 an die Kühleinheit 10 weitergeleitet. Um einen ungestörten Filtrationsbetrieb sicherstellen zu können, ist das Filterelement 28 von dem Filtergehäuse 32 mit einem radialen Abstand umfaßt, so daß das Filterelement 28 von dem verschmutzten Fluid, das über den Fluidzulauf 24 in die Vorrichtung zugeführt wird, umfangsseitig umspült werden kann.

In Blickrichtung auf die Fig.4 gesehen sind im oberen Bereich des Filtergehäuses 32 und diametral gegenüberliegend zu dem Fluidzulauf 24 in der Wand des Filtergehäuses 32 übereinanderliegend zwei Bypass-Ventile 36 angeordnet mit einander entsprechender Öffnungs- und Schließcharakteristik. Die Bypass-Ventile 36 dienen dazu, daß bei vollständig zugesetztem Filterelement 28 der Kühlbetrieb nicht unterbrochen wird, sondern in einer Art Notversorgung nach wie vor die Versorgung der Kühleinheit 10 mit zu kühlendem Fluid sichergestellt wird. Durch die Verwendung der beiden Bypass-Ventile 36 ist es möglich, mit nur einer Kühlvorrichtung einen größeren Bereich an Volumenstrommengen abzudecken, beispielsweise einen Bereich von 60 l bis 160 l, wobei bei niedrigen Volumenströmen dann nur ein Bypass-Ventil 36 anspricht und bei anderen Anwendungen mit höheren Volumenströmen beide Bypass-Ventile 36 benötigt werden, sofern das Filterelement 28 vollständig zugesetzt ist.

Auf seiner Oberseite mündet das Filterelement 28 in zwei Aufnahmezargen 38, die die Entnahme des Filterelementes 28 von Hand erleichtern. Das Filterelement 28 besteht vorzugsweise aus Materialien, die vollständig veraschbar sind, so daß sich das zugesetzte und verbrauchte Filterelement 28 nahezu rückstandsfrei entsorgen läßt. Für einen wirksamen Kühlbetrieb ist des weiteren vorgesehen, daß an eine Stirnseite der Kühleinheit 10 eine Motor-Lüftereinheit (nicht dargestellt) angeschlossen ist, die dazu dient, den Luftstrom über die Kühllamellen 16 zu führen und derart das erwärmte Fluid in den Fluid-Leitkanälen 18 auf einen vorgebbaren Wert herabzukühlen. Im Bereich von Betonpumpen, wo derartige Kühlvorrichtungen Verwendung finden, wird dabei das Fluid beispielsweise von 80°C auf 60°C abgekühlt. Auf seiner Oberseite ist das Filtergehäuse 32 von einem Abschlußdeckel 40 verschließbar, der über eine Schraubverbindung 42 an dem oberen Öffnungsrand des zylindrischen Filtergehäuses 32 festlegbar ist.

Im rechten Winkel und in derselben Bezugsebene ist neben dem Fluidzulauf 24 im Filtergehäuse 32 eine Anschlußstelle 44 für eine Verschmutzungsanzeige (nicht dargestellt) vorgesehen. Über die Anschlußstelle 44 läßt sich beispielsweise mittels eines elektrischen Verbindungskabels 46 die Verschmutzungsanzeige (nicht dargestellt) anschließen, die eine Aussage über den Verschmutzungsgrad des Filterelementes 28 erlaubt. Bei der Ausführungsform nach der Fig.6 ist das Stützrohr 30 modular über einzelne Kunststoff-Stützrohrsegmente aufgebaut und am Boden 34 ist das Filterelement 28 in einer Elementaufnahme 48 des Filtergehäuses 32 geführt.

Wie insbesondere die Draufsicht nach der Fig.2 zeigt, schließen sowohl die Kühleinheit 10 als auch die zylindrische Filtereinheit 12 auf ihrer Rückseite 50 im wesentlichen in einer gemeinsamen Ebene ab und senkrecht hierzu ist die Anschlußstelle 44 für die Verschmutzungsanzeige am Filtergehäuse 32 angeordnet. Der Fluidzulauf 24 sowie der Fluidablauf 26 liegen wiederum in einer gemeinsamen Ebene parallel zu der Rückseite 50 der gemeinsamen Abschlußwand. An den freien Stirnseiten oben und unten ist des weiteren an der Kühleinheit 10 ein stegartiges Festlegeteil 52 angeordnet, mit dem es möglich ist, beispielsweise über eine nicht näher dargestellte Schraubverbindung die Kühlvorrichtung an ortsfesten Bauteilen, auch bei einer mobilen Anwendung, festzulegen.

Dadurch, daß, wie aufgezeigt, der Filtertopf mit dem Filterelement 28 integraler Bestandteil des Kühlers in Form der Kühleinheit 10 ist, ist eine kompakte und leichte Bauweise erreicht und aufgrund der internen Fluidführung über die Fluid-Sammelräume 20 und die Fluid-Leitkanäle 18 ist weitestgehend eine aufwendige Verrohrung vermieden und Fehlerquellen bei der Montage und bei der Wartung der Kühlvorrichtung ausgeschlossen. Aufgrund der mehrfach vorhandenen Bypass-Ventile 36 ist eine verbesserte Anpassung an variable Volumenströme, insbesondere von 60l bis 160 l Durchlaufmenge, erreicht. Die Kühlvorrichtung ist im Hinblick auf die optimierte Recycelfähigkeit umweltfreundlich. Dadurch, daß ferner die Filtereinheit 12 in Strömungsrichtung des zu kühlenden Fluids vor dem plattenförmigen Lamellenkühler 10 angeordnet ist und daß die Filtereinheit 12 sich entlang der Längsseite des Lamellenkühlers 10 erstreckt, die von den Lamellen des Kühlers selbst freigehalten ist, kommt es zu einer sehr kompakt aufbauenden, plattenartig ausgestatteten Kühlvorrichtung, die wenig Einbauraum benötigt und dennoch ein sehr hohes Maß an zu erreichender Kühlleistung sicherstellt. Ferner ist bei der dahingehenden Anordnung vermieden, daß verschmutztes Fluid die fluidführenden Lamellen innerhalb des Plattenkühlers zusetzen könnte.

## Patentansprüche

1. Kühlvorrichtung mit einer von einem zu kühlenden Fluid, insbesondere Hydrauliköl, durchströmbaren Kühleinheit (10) und mit einer Filtereinheit (12) für die Filtration des Fluids, wobei
a) die Kühleinheit (10) und die Filtereinheit (12) einstückig miteinander verbunden sind,
b) wobei die Filtereinheit (12) zusammen mit der Kühleinheit (10) in einem Vorrichtungsgehäuse (14) angeordnet ist,
c) die Kühleinheit (10) ein plattenförmiger Lamellenkühler ist,
d) die Filtereinheit (12) in Strömungsrichtung des zu kühlenden Fluids vor dem plattenförmigen Lamellenkühler (10) angeordnet ist,
e) die Filtereinheit (12) sich im wesentlichen entlang der Längseite des Lamellenkühlers (10) erstreckt, die von den Lamellen des Kühlers selbst freigehalten ist und
f) das Filterelement (28) in einem Filtergehäuse (32) aufgenommen ist, das integraler Bestandteil des Vorrichtungsgehäuses (14) ist.

2. Kühlvorrichtung nach Anspruch 1, **dadurch gekennzeichnet, daß** das Vorrichtungsgehäuse (14) aus Blechteilen zusammengesetzt oder ein Gußteil ist.

3. Kühlvorrichtung nach Anspruch 1 und 2, **dadurch gekennzeichnet, daß** die Filtereinheit (12) zylindrisch ausgebildet ist und der Fluidzulauf (24) in das Vorrichtungsgehäuse (14) im oberen Bereich der Filtereinheit (12) erfolgt und der Fluidablauf (26) aus der Kühleinheit (10) in ihrem unteren Bereich.

4. Kühlvorrichtung nach einem der Ansprüche 1 bis 3, **dadurch gekennzeichnet, daß** im Filtergehäuse (32) mindestens zwei Bypass-Ventile (36) angeordnet sind, die bei unterschiedlichen Volumenströmen ansprechen.

5. Kühlvorrichtung nach einem der Ansprüche 1 bis 4, **dadurch gekennzeichnet, daß** das Filterelement (28) aus Materialien besteht, die vollständig veraschbar sind und daß die Durchströmung des Filterelementes (28) von außen nach innen erfolgt.

6. Kühlvorrichtung nach einem der Ansprüche 1 bis 5, **dadurch gekennzeichnet, daß** an die Kühleinheit (10), insbesondere an eine Stirnseite derselben, eine Motor-Lüftereinheit angeschlossen ist.

7. Kühlvorrichtung nach einem der Ansprüche 1 bis 6, **dadurch gekennzeichnet, daß** das Filtergehäuse (32) von einem Abschlußdeckel (40) verschließbar ist und daß am Filtergehäuse (32) eine Anschlußstelle (44) für eine Verschmutzungsanzeige vorgesehen ist.

## Claims

1. A cooling device comprising a cooling unit (10), through which a fluid to be cooled, in particular hydraulic oil, can flow, and a filter unit (12) for filtering the fluid, wherein
a) the cooling unit (10) and the filter unit (12) are integrally connected to one another,
b) the filter unit (12) is arranged, together with the cooling unit (10), in a device housing (14),
c) the cooling unit (10) is a plate-type finned cooler,
d) the filter unit (12) is arranged upstream of the plate-type finned cooler (10) in the flow direction of the fluid to be cooled,
e) the filter unit (12) extends substantially along the longitudinal side of the finned cooler (10), the longitudinal side being kept free of the fins of the cooler itself, and
f) the filter element (28) is accommodated in a filter housing (32) which is an integral part of the device housing (14).

2. A cooling device according to claim 1, **characterised in that** the device housing (14) comprises sheet-metal parts or is a casting.

3. A cooling device according to claims 1 and 2, **characterised in that** the filter unit (12) is cylindrically formed and the fluid inlet (24) leads into the device housing (14) in the upper region of the filter unit (12) and the fluid outlet (26) leads out of the cooling unit (10) in its lower region.

4. A cooling device according to any one of claims 1 to 3, **characterised in that** at least two bypass valves (36), which respond to different volumetric flow rates, are arranged in the filter housing (32).

5. A cooling device according to any one of claims 1 to 4, **characterised in that** the filter element (28) is made of materials which may be fully incinerated and **in that** the fluid flows through the filter element (28) from the outside towards the inside.

6. A cooling device according to any one of claims 1 to 5, **characterised in that** a motor-driven ventilator unit is connected to the cooling unit (10), in particular to an end face thereof.

7. A cooling device according to any one of claims 1 to 6, **characterised in that** the filter housing (32) is closeable by a cover plate (40) and **in that** a connection point (44) for a soiling indicator is provided on the filter housing (32).

## Revendications

1. Dispositif de refroidissement avec une unité réfrigérante (10) pouvant être traversée par un liquide refroidisseur, en particulier de l'huile hydraulique et avec une unité formant filtre (12) pour la filtration du liquide, moyennant quoi
a) l'unité réfrigérante (10) et l'unité formant filtre (12) sont reliées l' une avec l'autre d'un seul tenant,
b) moyennant quoi l'unité formant filtre (12) est disposée conjointement avec l'unité réfrigérante (10) dans un boîtier de dispositif(14),
c) l'unité réfrigérante (10) est un radiateur à ailettes en forme de plaques,
d) l'unité formant filtre (12) est disposée dans le sens d'écoulement du liquide refroidisseur devant le radiateur à ailettes en forme de plaques (10),
e) l'unité formant filtre (12) s'étend essentiellement le long du côté longitudinal du radiateur à ailettes (10), laquelle est libérée des ailettes du radiateur et,
f) l'élément formant filtre (28) est reçu dans un boîtier de filtre (32), faisant partie intégrante du boîtier de dispositif(14).

2. Dispositif de refroidissement selon la revendication 1, **caractérisé en ce que** le boîtier de dispositif(14) est composé de pièces de tôlerie ou est une pièce moulée en fonte.

3. Dispositif de refroidissement selon les revendications 1 et 2, **caractérisé en ce que** l'unité formant filtre (12) est conçue de manière cylindrique et l'arrivée du liquide (24) a lieu dans le boîtier de dispositif(14) dans la zone supérieure de l'unité formant filtre (12) et l'écoulement du fluide (26) vient de l'unité réfrigérante (10) dans sa zone inférieure.

4. Dispositif de refroidissement selon l'une des revendications 1 à 3, **caractérisé en ce que** au moins deux soupapes de dérivation (36) sont disposées dans le boîtier de filtre (32), lesquelles fonctionnent selon différents débits volumétriques.

5. Dispositif de refroidissement selon l'une des revendications 1 à 4, **caractérisé en ce que** l'élément formant filtre (28) est composé de matériaux, qui peuvent être entièrement incinérés et **en ce que** le sens d'écoulement de l'élément formant filtre (28) a lieu de l'extérieur vers l'intérieur.

6. Dispositif de refroidissement selon l'une des revendications 1 à 5, **caractérisé en ce qu'**une unité de ventilation à moteur est raccordée à l'unité réfrigérante (10), en particulier sur la face avant de celle-ci .

7. Dispositif de refroidissement selon l'une des revendications 1 à 6, **caractérisé en ce que** le boîtier de filtre (32) peut être fermé par un couvercle de fermeture (40) et **en ce qu'**une prise de courant (44) est prévue au niveau du boîtier de filtre (32) pour une indication de l'encrassage.
